# EUROPÄISCHE PATENTANMELDUNG

(11) **EP 3 838 954 A1**
(43) Veröffentlichungstag der Anmeldung: **23.06.2021**
(21) Anmeldenummer: 19216822.7
(22) Anmeldetag: 17.12.2019
(51) Int. Cl.: C08G 18/10, C08G 18/32, C08G 18/73

(54) **THERMOPLASTISCHES POLYURETHAN MIT VERBESSERTER SCHMELZEELASTIZITÄT**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Verfahren zur Herstellung eines thermoplastischen Polyurethans mit verbesserter, geringerer Schmelzeelastizität. Das Verfahren umfasst die Verfahrensschritte: a) Herstellen einer Mischung aus einer Teilmenge Hexamethylendiisocyanat und der Gesamtmenge Butandiol; b) Vermischen der im Verfahrensschritt a) hergestellten Mischung mit einem aus Verfahrensschritt e) erhaltenen Oligomerisat-Ausgangsteilstrom; c) Zur Reaktion bringen der Mischung aus Verfahrensschritt b); d) Aufteilen der in Schritt c) erhaltenen Reaktionsmischung in zwei Ausgangsteilströme; e) Rückführen eines Ausgangsteilstromes aus Verfahrensschritt d) als Eingangsteilstrom für die Mischung im Verfahrensschritt b); f) Vermischen der Restmenge Hexamethylendiisocyanat mit dem verbleibenden Ausgangsteilstrom des Verfahrensschrittes d); und g) Ausreagieren der in Verfahrensschritt f) erhaltenen Mischung zum Erhalt eines thermoplastischen Polyurethans. Die Erfindung betrifft weiterhin ein thermoplastisches Polyurethan erhältlich durch zur Reaktion bringen von 1,6-Hexamethylendiisocyanat (HDI) und 1,4-Butandiol (BDO), wobei das Polyurethan bei einem komplexen Modul G* von 10⁴ Pa einen Phasenwinkel, bestimmt nach ISO 6721-10:2015, von größer oder gleich 65° und kleiner oder gleich 75° aufweist.

## Beschreibung

Die vorliegende Erfindung betrifft ein Verfahren zur Herstellung eines thermoplastischen Polyurethans mit verbesserter, geringerer Schmelzeelastizität. Das Verfahren umfasst die Verfahrensschritte: a) Herstellen einer Mischung aus einer Teilmenge Hexamethylendiisocyanat und der Gesamtmenge Butandiol; b) Vermischen der im Verfahrensschritt a) hergestellten Mischung mit einem aus Verfahrensschritt e) erhaltenen Oligomerisat-Ausgangsteilstrom; c) Zur Reaktion bringen der Mischung aus Verfahrensschritt b); d) Aufteilen der in Schritt c) erhaltenen Reaktionsmischung in zwei Ausgangsteilströme; e) Rückführen eines Ausgangsteilstromes aus Verfahrensschritt d) als Eingangsteilstrom für die Mischung im Verfahrensschritt b); f) Vermischen der Restmenge Hexamethylendiisocyanat mit dem verbleibenden Ausgangsteilstrom des Verfahrensschrittes d); und g) Ausreagieren der in Verfahrensschritt f) erhaltenen Mischung zum Erhalt eines thermoplastischen Polyurethans. Die Erfindung betrifft weiterhin ein thermoplastisches Polyurethan erhältlich durch zur Reaktion bringen von 1,6-Hexamethylendiisocyanat (HDI) und 1,4-Butandiol (BDO), wobei das Polyurethan bei einem komplexen Modul G^{*} von 10⁴ Pa einen Phasenwinkel, bestimmt nach ISO 6721-10:2015, von größer oder gleich 65° und kleiner oder gleich 75° aufweist.

Die Eigenschaften von Polymeren und deren Schmelzen ergeben sich als komplexe Funktion aus der chemischen Zusammensetzung und dem Herstellungsprozess als solchem. Neben den inter- wie intramolekularen Wechselwirkungen der Polymerketten, deren Art und Größe von dem Aufbau und der Anordnung der einzelnen Monomeren bestimmt wird, den Zuschlagsstoffen wie Katalysatoren, Flexibilisatoren etc., ergibt sich zudem ein nicht unerheblicher Eigenschaftsanteil der Polymergesamtheit durch integrale Größen, wie beispielsweise das mittlere Molekulargewicht oder die Molekulargewichtsverteilung. Auf letztere kann insbesondere durch die Verfahrensführung bei der Herstellung Einfluss genommen werden, sodass mittels einer geeigneten Kombination aus Edukten, gekoppelt über das spezifische Herstellungsverfahren, neue und unerwartete Eigenschaften für Polymere oder deren Schmelzen erhältlich sind.

Die Herstellung von Polyurethanen aus Diolen und Diisocyanaten ist bekannt.

So offenbart beispielsweise die DE728981 C ein nicht kontinuierliches Verfahren zur Herstellung von Polyurethanen bzw. Polyharnstoffen, dadurch gekennzeichnet, dass man organische Diisocyanate mit solchen organischen Verbindungen zur Reaktion bringt, die mindestens 2 Hydroxyl- oder Aminogruppen mit austauschbaren Wasserstoffatomen oder mindestens eine Hydroxylgruppe und mindestens eine Aminogruppe der genannten Art enthalten.

Eine weitere Verfahrensausgestaltung ist zudem in der DE 112011100836 B4 beschrieben. Das Patentdokument offenbart ein Polyurethan, das ein Reaktionsprodukt der folgenden Reaktionsbestandteile umfasst: A) ein oder mehrere Isocyanate, wobei das Isocyanat, Diisocyanat und/oder Polyisocyanat umfasst; B) ein oder mehrere Polyole; C) ein oder mehrere Katalysatoren; und D) 0,05 bis 5 Gew.-% Polybutadien, bezogen auf 100 Gew.-% von A), B), C) und D); wobei das Polybutadien eine 1,2-Butenstruktureinheit, 2,3-(cis)-Butenstruktureinheit und 2,3-(trans)-Butenstruktureinheit umfasst, wobei, bezogen auf 100 Gew.-% Polybutadien, die Menge der 1,2-Butenstruktureinheit weniger als 30 Gew.-% beträgt, die Menge der 2,3-(trans)-Butenstruktureinheit mehr als die Menge der 2,3-(cis)- Butenstruktureinheit ausmacht und die Menge der 2,3-(trans)-Butenstruktureinheit 40 bis 50 Gew.-% beträgt.

Des Weiteren beschreibt die EP 2 922 886 B1 ein Verfahren zur Herstellung von PUR-Weichschaumstoffen mit einer Rohdichte gemäß DIN EN ISO 3386-1-98 im Bereich von ≥ 63 kg/m³ bis ≤ 83 kg/m³ und einer Hysterese gemäß DIN EN ISO 2439-1-2009 von ≤ 16 durch Umsetzung von Komponente A enthaltend A1 mindestens ein Polyetherpolyol mit einer Funktionalität von 2 bis 6 einer Hydroxyl-Zahl (OH-Zahl) gemäß DIN 53240 von 9 bis 112 mg KOH/g, einem Anteil an Ethylenoxid von 5 bis 40 Gew.-% (bezogen auf die Summe der verwendeten Alkylenoxide) A2 Wasser und/oder physikalische Treibmittel, A3 gegebenenfalls gegenüber Isocyanaten reaktionsfähige Wasserstoffatome aufweisende Verbindungen mit einer OH-Zahl von 140 mg KOH/g bis 1800 mg KOH/g, A4 Hilfs- und Zusatzstoffen wie a) Katalysatoren, b) oberflächenaktive Zusatzstoffe und c) Pigmente oder Flammschutzmittel wobei Komponente A frei von Polyricinolsäureestern ist, mit Komponente B, enthaltend ein Gemisch an Di- und Polyisocyanaten der Diphenylmethan (MDI)-Reihe (B1), gegebenenfalls ein oder mehrere Polyetherpolyole (B2) mit einer Funktionalität von 2 bis 8, vorzugsweise von 2 bis 6, einer OH-Zahl gemäß DIN 53240 von ≥ 9 mg KOH/g bis ≤ 56 mg KOH/g, wobei das Verhältnis von 4,4'-MDI zu 2,4'-MDI zwischen 1,6 und 2,7 liegt, und der Gesamt-Monomeren-Gehalt bezogen auf die Summe der eingesetzten Isocyanate 75 bis 85 Gew.-% beträgt, wobei die Herstellung des PUR-Weichschaumes bei einer Kennzahl von 75 bis 110 erfolgt.

Trotz der schon bekannten Verfahren zur Umsetzung von Diolen und Diisocyanaten besteht weiterhin ein Bedarf zur kontinuierlichen Herstellung von Polyurethanen mit steuerbaren und für die weitere Herstellung beispielsweise von Formteilen geeigneten Eigenschaften.

Es ist daher die Aufgabe der vorliegenden Erfindung ein reproduzierbares und flexibles Verfahren zur kontinuierlichen Herstellung von Polyurethanen mit verbesserten rheologischen Eigenschaften des Polymers oder dessen Schmelze bereitzustellen. Insbesondere ist es auch die Aufgabe der vorliegenden Erfindung ein thermoplastisches Polyurethan mit verbesserten Schmelzebruch-Eigenschaften bereitzustellen.

Vorgeschlagen wird daher ein Verfahren gemäß Anspruch 1 und ein Polyurethan gemäß Anspruch 14. Vorteilhafte Weiterbildungen sind in den Unteransprüchen angegeben. Sie können beliebig kombiniert werden, sofern sich aus dem Kontext nicht eindeutig das Gegenteil ergibt.

Erfindungsgemäß ist ein Verfahren zur kontinuierlichen Herstellung thermoplastischen Polyurethans umfassend die Schritte:
a) Herstellen einer Mischung aus einer Teilmenge Hexamethylendiisocyanat (HDI) und der Gesamtmenge Butandiol (BDO);
b) Vermischen der im Verfahrensschritt a) hergestellten Mischung mit einem aus Verfahrensschritt e) erhaltenen Oligomerisat-Ausgangsteilstrom;
c) Zur Reaktion bringen der Mischung aus Verfahrensschritt b);
d) Aufteilen der in Schritt c) erhaltenen Reaktionsmischung in zwei Ausgangsteilströme;
e) Rückführen eines Ausgangsteilstromes aus Verfahrensschritt d) als Eingangsteilstrom für die Mischung im Verfahrensschritt b);
f) Vermischen der Restmenge Hexamethylendiisocyanat mit dem verbleibenden Ausgangsteilstrom des Verfahrensschrittes d); und
g) Ausreagieren der in Verfahrensschritt f) erhaltenen Mischung zum Erhalt eines thermoplastischen Polyurethans.

Überraschenderweise wurde gefunden, dass es mittels des oben angegebenen Verfahrens möglich ist, thermoplastische Polyurethane mit spezifischen rheologischen Eigenschaften bereitzustellen. Über das Verfahren sind thermoplastische Polyurethane erhältlich, welche, verglichen mit nach dem Stand der Technik hergestellten thermoplastischen Polyurethanen, eine deutlich erniedrigte Schmelzeelastizität aufweisen. Diese erniedrigte Schmelzeelastizität führt zu einem Polymermaterial, welches sich beispielsweise in Extrusionsprozessen besser verarbeiten lässt. Die Fließeigenschaften der erfindungsgemäß hergestellten Polyurethane sind deutlich weniger viskos geprägt, welches zu niedrigeren Einlaufdruckverlusten und einer geringeren Strangaufweitung in Extrusionsprozessen führt. Insbesondere letztere Eigenschaft kann zu Extrudaten mit einem deutlich geringeren Anteil an Schmelzebrüchen und damit einer gleichmäßigeren, extrudierten Oberfläche führen. Ohne durch die Theorie gebunden zu sein ergeben sich die erfindungsgemäßen Vorteile zum einen durch die kontrollierte Reaktion der mit den Oligomeren, welche im Rahmen des Prozesses im Kreislauf zurückgeführt werden, homogen vermischten Monomere. Zum anderen wird anmelderseitig angenommen, dass zusätzlich die finale Kettenverlängerung über die späte Zugabe weiteren Diisocyanats mit der Oligomermischung mit geeigneter Molekularmassenverteilung zu den positiven Verarbeitungseigenschaften der erhältlichen Polymeren beiträgt.

Das thermoplastische Polyurethan wird im Rahmen eines kontinuierlichen Verfahrens hergestellt. Das thermoplastische Polyurethan wird im Rahmen eines kontinuierlichen Verfahrens hergestellt. Thermoplastisches Polyurethan (TPU) ist ein Kunststoff, welcher sich bei Raumtemperatur vergleichbar klassischen Duromeren verhält, sich aber unter Wärmezufuhr plastisch verformen lässt und ein thermoplastisches Verhalten zeigt. Thermoplastische Kunststoffe lassen sich in rein physikalischen Prozessen in Kombination von hohen Scherkräften und Wärmeeinwirkung und anschließender Abkühlung verarbeiten. Obwohl keine chemische Vernetzung durchgeführt wird, zeigen die hergestellten Werkstoffe aufgrund ihrer besonderen Molekularstruktur Eigenschaften wie sie von vernetzten Polymeren bekannt sind. Erneute Wärme- und Scherkrafteinwirkung führt zum Aufschmelzen des Materials gegebenenfalls unter Verformung. Das TPU wird im Rahmen eines kontinuierlichen Verfahrens erhalten. Ein kontinuierliches Verfahren zeichnet sich dadurch aus, dass über die Zeit gesehen eine kontinuierliche Zuführung der Edukte zum Reaktionssystem erfolgt. Zudem wird das entstehende Produkt über die Zeit gesehen kontinuierlich aus dem Reaktionssystem entfernt. Insbesondere ist das kontinuierliche Verfahren ein kontinuierliches Kreislaufverfahren, in welchen mindestens eine, während des Verfahrens entstehende Komponente an einen anderen, im Prozessverlauf früheren Reaktionsort, gefördert wird.

Im Verfahrensschritt a) erfolgt das Herstellen einer Mischung aus einer Teilmenge Hexamethylendiisocyanat (HDI) und Butandiol (BDO). In diesem Schritt werden die einzelnen Monomer-Komponenten unter Rühren oder dem Einsatz von Scherkräften zusammengegeben, so dass eine Verteilung der einen in der anderen Komponente erhalten wird. Zweckmäßigerweise kann dieser Verfahrensschritt bei einer Temperatur erfolgen, bei welcher die beiden Komponenten noch nicht im nennenswerten Umfang miteinander reagieren. Die Monomere reagieren noch nicht im nennenswerten Umfang, wenn mindestens 50 Mol-%, bevorzugt 75 Mol-%, noch bevorzugter 90 Mol-% der reaktionsfähigen Monomere noch nicht miteinander reagiert haben. Die Temperaturen können zum Erhalt der Mischung der Monomere beim Vermischen in einem Temperaturbereich von beispielsweise 20°C bis 100°C gehalten werden. Bevorzugt kann die Verweilzeit bei diesem Mischvorgang, bevor die Mischung in den nächsten Prozessschritt übergeht, kleiner als eine Minute, bevorzugt kleiner als 10 Sekunden gehalten werden. Als Einsatzmonomere können dabei sämtliche Isomeren des HDIs und BDOs eingesetzt werden. Ein wesentliches Verfahrensmerkmal ist zudem, dass nur eine Teilmenge an HDI zu diesem Zeitpunkt mit dem BDO vermischt wird. Eine Teilmenge bedeutet, dass zu einem späteren Verfahrenszeitpunkt noch weitere, signifikante HDI-Mengen, in den Prozess gefahren werden. Eine weitere HDI-Menge ist signifikant, wenn diese mehr als 2,5 Mol-%, bevorzugt mehr als 5 Mol-% und noch bevorzugter mehr als 10 Mol-% der gesamten HDI Menge ausmacht.

Im Verfahrensschritt b) erfolgt das Vermischen der im Verfahrensschritt a) hergestellten Mischung mit einem aus Verfahrensschritt e) erhaltenen Oligomerisat-Ausgangsteilstrom. In diesem Verfahrensschritt wird also eine im Wesentlichen aus HDI und BDO Monomeren bestehende Mischung mit einem Strom aus einer späteren Prozessphase vermischt, welcher im Wesentlichen nicht aus HDI und BDO-Monomeren, sondern aus Oligomeren beider Monomere besteht. Oligomere sind dabei Reaktionsprodukte aus der Reaktion von HDI und BDO, wobei der durchschnittliche Polymerisationsgrad der Oligomere, berechnet aus dem Quotienten der zahlengemittelten Molmasse der Oligomere (Mₙ, bestimmt durch GPC Messungen) und der Molmasse der Wiederholeinheit (die molare Masse des HDI addiert zu der molaren Masse des BDO und die Summe dividiert durch 2), bei einem Umsatz von 100% bevorzugt aus mehr als 3, noch bevorzugter mehr als 6, des Weiteren noch bevorzugter mehr als 8 Wiederholeinheiten besteht. Dieser durchschnittliche Polymerisationsgrad der Oligomere kann eine ausreichende Vermischbarkeit unter Beibehalt der bevorzugten rheologischen Eigenschaften des später im Verfahrensablauf erhältlichen Polymers bewirken. Bei den Oligomeren handelt es sich vorzugsweise im Wesentlichen um Hydroxy-terminierte Oligomere. "Im Wesentlichen" bedeutet in diesem Zusammenhang, dass mindestens 95 mol-%, vorzugsweise mindestens 98 mol-%, besonders bevorzugt mindestens 99 mol-% und noch bevorzugter mindestens 99,5 mol-% der Oligomere Hydroxy-terminierte Oligomere sind.

Im Verfahrensschritt c) erfolgt das zur Reaktion bringen der Mischung aus Verfahrensschritt b). Das zur Reaktion bringen beinhaltet dabei, dass aus den einzelnen HDI/BDO-Monomeren größere Moleküle durch Polyaddition entstehen. Das zur Reaktion bringen führt aber nicht dazu, dass die gesamten vorliegenden Monomere in Polymerketten eingebaut werden. Da ein Überschuss an BDO vorliegt, wird vor allem noch BDO in der entstehenden Reaktionsmischung vorliegen. Bevorzugt kann der Restgehalt an Monomeren, welche nicht in Ketten eingebaut ist, größer als 10 Mol%, bevorzugt größer als 15 Mol-%, noch bevorzugter größer als 25 Mol-% betragen. Zweckdienlicherweise kann die Mischung in diesem Schritt über geeignete Verfahrensmittel temperiert werden.

Im Verfahrensschritt d) erfolgt das Aufteilen der in Schritt c) erhaltenen Reaktionsmischung in zwei Ausgangsteilströme. Nach Bildung des Oligomerisats aus den BDO und HDI Monomeren wird die erhaltene Reaktionsmischung im Ausgang dieser Reaktionsstufe aufgeteilt und über zwei unterschiedliche Leitungen an zwei verschiedene Reaktionsorte geleitet. Eine Leitung enthält einen Teil des Ausgangsstromes und führt diesen in eine frühere Verfahrensstufe im Kreis zurück, während der restliche Teil in den folgenden Verfahrensschritt gegeben wird. Ersteres ist Teil des Verfahrensschrittes e), in welchem das Rückführen eines Ausgangsteilstromes aus Verfahrensschritt d) als Eingangsteilstrom für die Mischung im Verfahrensschritt b) erfolgt. Ein Teil des Oligomerisats aus der Verfahrensstufe d) wird also in den Verfahrensschritt b), also zur noch nicht reagierten Mischung von HDI und BDO gegeben.

Die Restmenge des Ausgangsstromes aus dem Verfahrensschritt d) wird im Verfahrensschritt f) mit der Restmenge Hexamethylendiisocyanat vermischt und bildet den weiteren Prozessstrom d).

Im Verfahrensschritt g) erfolgt das Ausreagieren der in Verfahrensschritt f) erhaltenen Mischung zum Erhalt eines thermoplastischen Polyurethans. Das Ausreagieren kann dabei beispielsweise durch Temperaturerhöhung induziert werden und beinhaltet das weitere Reagieren der Monomere mit Oligomeren unter Ausbildung von Polymeren. Das Ausreagieren kann dabei nur durch Temperaturerhöhung oder auch durch eine Temperaturerhöhung in Verbindung mit einer mechanischen Behandlung, beispielsweise in Form einer Extrusion erfolgen. Neben der Scherbelastung können auch höhere oder tiefere Drücke zu Einsatz kommen. Es ist auch möglich, innerhalb dieses Schrittes weitere Maßnahmen, wie beispielsweise eine Entgasung durch Anlegen eines Unterdrucks, durchzuführen. Dies kann zur Vergleichmäßigung der Eigenschaften des Polymers beitragen. Das Material kann auch über nachgeschaltete Aufarbeitungsschritte weiter konditioniert werden. Beispielsweise durch Kühlen und Erstarren, bevorzugt mittels Wasserkühlung, und Überführen in ein Schüttgut durch einen zusätzlichen Granulationsschritt.

Das im erfindungsgemäßen Verfahren eingesetzte Hexamethylendiisocyanat (HDI) und Butandiol (BDO) und / oder deren Vorläuferverbindungen können aus fossilen oder biologischen Quellen gewonnen worden sein. Vorzugsweise wird 1,6-Diisocyanatohexan (HDI) aus 1,6-Hexamethylendiamin hergestellt, wobei das 1,6-Hexamethylendiamin aus biologischen Quellen, vorzugsweise durch bakterielle Fermentation, gewonnen wird.

In einer bevorzugten Ausführungsform des Verfahrens kann das Hexamethylendiisocyanat 1,6-Hexamethylendiisocyanat und das Butandiol 1,4- Butandiol sein. Insbesondere diese Isomeren des HDIs und des BDOs haben im Vergleich zu den Stand-der-Technik-Verfahren einen besonders signifikanten Unterschied in der Schmelzeelastizität als Funktion der Herstellungsweise gezeigt. Ohne durch die Theorie gebunden zu sein wird dieser große Unterschied auf die spezielle kontinuierliche Verfahrensführung mit Rückführung gebildeter Oligomere zurückgeführt.

In einer weiteren Ausgestaltung des Verfahrens kann das Molverhältnis von HDI zu BDO, über den gesamten Prozess, berechnet als Quotient Mol HDI / Mol BDO, größer oder gleich 0,9 und kleiner oder gleich 1,1 betragen. Zum Erhalt eines Polymers mit einem möglichst geringen Anteil an Schmelzebruch, hat es sich als besonders günstig erwiesen, dass das molare Verhältnis HDI zu BDI im Bereich um 1 liegt. Innerhalb dieses Verhältnisses lassen sich auch ohne zusätzliche "weiche" Monomere im Polymer verbesserte viskose Eigenschaften erhalten.

Innerhalb eines weiteren Aspektes des Verfahrens kann die Temperatur im Verfahrensschritt a) größer oder gleich 25°C und kleiner oder gleich 60°C betragen. Zum Erhalt einer möglichst gleichmäßigen Mischung beider Monomere mit einer niedriger Anzahl schon reagierter Monomere hat sich oben angegebener Temperaturbereich als besonders geeignet herausgestellt. Niedrigere Temperaturen können unvorteilhaft sein, da die Viskosität der Bestandteile dann zu hoch und nur eine nicht ausreichende Vormischung erhältlich ist. Weiterhin kann das verwendete Butandiol ausfrieren, vor allem wenn es sich um 1,4-Butandiol handelt. Höhere Temperaturen können nachteilig sein, da dann der Anteil schon reagierter Monomere zu groß wird. Bevorzugte Temperaturbereiche innerhalb dieses Schrittes können bevorzugt zwischen größer oder gleich 35°C und kleiner oder gleich 55°C, noch bevorzugter zwischen größer oder gleich 40°C und kleiner oder gleich 50°C liegen.

Innerhalb einer bevorzugten Ausführungsform des Verfahrens kann die Temperatur im Verfahrensschritt c) größer oder gleich 170°C und kleiner oder gleich 190°C betragen. Zur Ausbildung einer ausreichenden und geeigneten Oligomer-Konzentration und -Zusammensetzung hat sich oben angegebener Temperaturbereich als besonders geeignet herausgestellt. Ohne durch die Theorie gebunden zu sein scheint es, dass sich innerhalb angemessener Verweilzeiten eine enge Molekularmassenverteilung an reagierten Oligomeren ergibt, welche zu den geeigneten rheologischen Eigenschaften des ausreagierten Polymers beitragen. Bevorzugt können diese Oligomere mit einer Verweilzeit im oben angegebenen Temperaturbereich von 5 Minuten bis zu 35 Minuten erhalten werden.

In einer weiteren Charakteristik des Verfahrens kann die Temperatur im Verfahrensschritt g) größer oder gleich 180°C und kleiner oder gleich 240°C betragen. Zur Ausbildung eines möglichst wenig schmelzeelastischen Polymers hat sich der oben angegebene Temperaturbereich als günstig herausgestellt. Die Konzentration an freien Monomeren ist nach diesem Temperaturschritt äußerst gering und es besteht nicht die Gefahr einer ungewollten temperaturinduzierten Kettendegradation. Als Resultat ergibt sich eine reproduzierbare Molekulargewichtsverteilung, welche zu den geeigneten Polymereigenschaften beiträgt. Höhere Temperaturen können nachteilig sein, da dann die Gefahr eines unerwünschten Polymerabbaus steigt. Niedrigere Temperaturen können ungünstig sein, da dann die Verweilzeit zum Erhalt eines weitgehend ausreagierten Polymers zu lang wird.

In einer bevorzugten Ausführungsform des Verfahrens kann das molare Verhältnis des im Verfahrensschritt a) und im Verfahrensschritt f) eingesetzten HDIs, berechnet als Mol HDI in a) / Mol HDI in f), größer oder gleich 2 und kleiner oder gleich 8 betragen. Zum Erhalt eines möglichst schmelzeelastischen Polyurethans hat es sich als günstig herausgestellt, dass die molaren HDI-Mengen, welche in den unterschiedlichen Verfahrensstufen eingesetzt werden, im oben angegeben Verhältnis stehen. Dieses Verhältnis kann dazu beitragen eine besonders homogene Mischung im Extrusionsschritt zu erhalten.

Innerhalb einer weiteren Ausgestaltung des Verfahrens kann das Gewichtsverhältnis des im Verfahrensschritt b) zurückgeführten Oligomerisats bezogen auf die Menge an eingesetzter Mischung aus HDI und BDO größer oder gleich 10 und kleiner oder gleich 30 betragen. Überraschend wurde gefunden, dass das Verhältnis von rückgeführtem zu weitergeleitetem Oligomer einen Einfluss auf rheologischen Eigenschaften des erhältlichen Polymers hat. Ohne durch die Theorie gebunden zu sein kann dieses Rücklauf- zu Monomerdosierungs-Verhältnis einen besonders hohen Einfluss auf die Temperaturführung haben. Im speziellen ist es außerdem sehr vorteilhaft, dass die Temperatur in diesem Verfahrensschritt innerhalb enger Grenzen gehalten wird. Die minimale Temperatur in diesem Verfahrensschritt liegt typischerweise nach der Mischung der Monomere mit dem Oligomerisat und die maximale Temperatur am Ausgang der Verfahrensstufe vor. An dieser Stelle kann beispielsweise eine Kühlung vorgesehen sein. Bevorzugt kann die Temperaturdifferenz zwischen diesen Punkten maximal 20 K, besonders bevorzugt kleiner als 10 K betragen.

In einer weiteren, bevorzugten Ausführungsform des Verfahrens kann der Gewichtsanteil der im Verfahrensschritt f) zugegebenen HDI-Menge bezogen auf die Menge an Oligomerisat, berechnet als kg/h HDI f) / kg/h Oligomerisat f), größer oder gleich 0,1 und kleiner oder gleich 0,6 betragen. Neben der Herstellung des Oligomerisats unter Verwendung einer Oligomerisat-Rückführung, wurde gefunden, dass auch die Menge an zugegebenen HDI zum Oligomerisat einen Einfluss auf die Eigenschaften des erhältlichen Polymers ausübt. Es zeigt sich, dass die angegebene HDI Menge eine schnelle Reaktion innerhalb der gegebenen Verweilzeit zulässt.

Nach einem bevorzugten Aspekt des Verfahrens kann das im Verfahrensschritt f) zugegebene HDI eine Temperatur von größer oder gleich 10°C und kleiner oder gleich 150°C aufweisen. Diese Temperatur ist für die Einmischung im Extrusionsschritt besonders dienlich, da das HDI den Oligomerisatstrom kühlt und dadurch die maximale Temperatur, die bei dem Prozess auftritt, beschränkt. Des Weiteren kann die Temperatur bevorzugt zwischen größer oder gleich 20°C und kleiner oder gleich 60°C betragen.

In einer weiteren Charakteristik des Verfahrens kann das Molverhältnis von HDI zu BDO im Verfahrensschritt a), berechnet als Quotient Mol HDI / Mol BDO, größer oder gleich 0,5 und kleiner oder gleich 0,99 betragen. Weiterhin kann das Verhältnis größer oder gleich 0,6 und kleiner oder gleich 0,95 betragen.

In einer weiteren Ausführungsform des Verfahrens kann das ausreagierte thermoplastische Polymer aus dem Verfahrensschritt g) extrudiert werden. Zum Erhalt eines besonders schmelzeelastischen Polymers hat es sich als geeignet herausgestellt, dass das Ausreagieren des HDI-Monomers mit den schon gebildeten Oligomeren zu den Polymeren nicht nur auf Basis einer Temperaturerhöhung, sondern unter gleichzeitiger Anwendung von Scherkräften erfolgt. Die Scherkräfte können neben der gleichzeitigen Förderung der homogenen Mischung der Schmelze dazu beitragen, dass eine besondere Ausrichtung der gebildeten Polymerketten erhalten wird, welche die besonderen rheologischen Eigenschaften fördert. Es werden gleichmäßigere und schmelzeelastischere Polymere erhalten.

Innerhalb eines weiteren Aspektes des Verfahrens kann die Temperatur während der Extrusion größer oder gleich 190°C und kleiner oder gleich 240°C betragen. In diesem Temperaturbereich ist die Reproduzierbarkeit besonders hoch und die thermische Belastung besonders gering, so dass auch wenige Nebenreaktionen, die ggf. zur Erhöhung der Schmelzeelastizität beitragen können, auftreten.

Die Erfindung betrifft weiterhin ein thermoplastisches Polyurethan erhältlich durch zur Reaktion bringen von 1,6-Hexamethylendiisocyanat (HDI) und 1,4-Butandiol (BDO), wobei das Polyurethan im geschmolzenen Zustand im linear elastischen Bereich, beschrieben in der ISO Norm 6721-10 unter Punkt 7.7, bei einem komplexen Modul G^{*} von 10⁴ Pa einen Phasenwinkel von größer oder gleich 65° und kleiner oder gleich 75° aufweist, wobei Phasenwinkel und komplexer Modul nach ISO 6721-10:2015 bestimmt werden. Für die Vorteile des erfindungsgemäßen Polyurethans wird insbesondere auf die Vorteile des nach dem erfindungsgemäßen Verfahren erhältlichen Polyurethans verwiesen.

In einer bevorzugten Ausgestaltung des Polyurethans kann das molare Verhältnis von Hexamethylendiisocyanat zu Butandiol, berechnet als Molmenge HDI / Molmenge BDO, größer oder gleich 0,9 und kleiner oder gleich 1,1 betragen. Bei einem Verhältnis größer 1,1 kann das Material seine thermoplastischen Eigenschaften einbüßen und bei einem Verhältnis von kleiner als 0,9 können die mechanischen Eigenschaften nachteilig beeinflusst werden.

In einer weiteren Ausführungsform der Erfindung kann das thermoplastische Polyurethan katalysatorfrei sein. Überraschend wurde festgestellt, dass sich die besonders für die Extrusion geeigneten Polymere ohne Einsatz von Polymerisationskatalysatoren erhalten lassen. Dies ist überraschend, da üblicherweise zum Erhalt eines homogenen Polyurethans Katalysatoren eingesetzt werden. Das erfindungsgemäße Polyurethan ist katalysatorfrei, wenn die Menge an Katalysator kleiner als 1,0 Gew.-%, bevorzugt kleiner als 0,5 Gew.-%, noch bevorzugter kleiner als 0,1 Gew.-% beträgt. Katalysatoren sind dabei Substanzen, welche die Reaktion der einzelnen Monomere zu Ausbildung von Oligo- oder Polymeren fördern. Üblich Katalysatoren sind insbesondere solche, die die Reaktion zwischen den NCO-Gruppen der Diisocyanate und den Hydroxylgruppen der Diole beschleunigen. Katalysatoren können beispielsweise tertiäre Amine, wie z. B. Triethylamin, Dimethylcyclohexylamin, N-Methylmorpholin, N,N-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche sein.

Des Weiteren im Sinne der Erfindung ist ein Polyurethan, welches nach dem erfindungsgemäßen Verfahren hergestellt wurde.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung einzuschränken. Es zeigen die:
Fig. 1 einen möglichen Aufbau zur kontinuierlichen Herstellung der erfindungsgemäßen Polyurethane;
Fig. 2 eine Auftragung des Phasenwinkels als Funktion des komplexen Moduls für ein thermoplastisches Polyurethan erhalten nach dem erfindungsgemäßen Verfahren und ein thermoplastisches Polyurethan erhalten nach einem Stand der Technik Verfahren; und
Fig. 3 ein Schaubild zur Definition des Verfahrens und der Verfahrensschritte sowie der Stoffströme des erfindungsgemäßen Verfahrens.

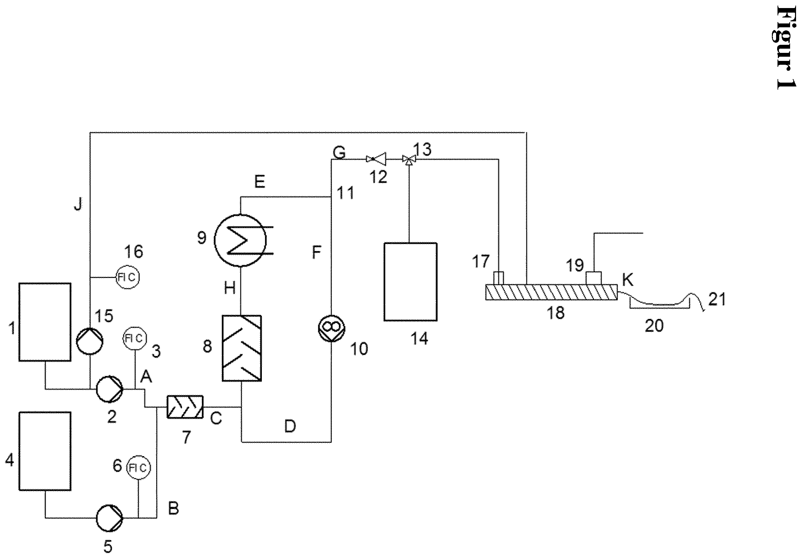

Die Figur 1 zeigt einen möglichen Aufbau zur kontinuierlichen Herstellung eines thermoplastischen Polyurethans mit verbesserter Schmelzeelastizität. Aus der HDI-Vorlage 1 wird mittels einer Pumpe 2 der HDI-Strom (Strom A) entnommen. Die entnommene Menge kann über einen Massedurchflussmesser 3 gemessen werden. Ein ähnlicher Aufbau ergibt sich für die BDO-Vorlage 4 mit BDO-Pumpe 5 und Durchflussmesser 6 (Strom B). Beide Ströme A und B werden in den Statikmischer 7 gefördert und miteinander zum Strom C vermischt. Strom C wird in mit einem umlaufenden Oligomerstrom D im temperierbaren Mischer 8, 9 zum Strom E gemischt, welcher an der Verzweigung 11 in zwei Teilströme (Strom G, F) aufgeteilt wird. Hinter dem Druckhalteventil 12 wird der Strom G an einem Dreiwegeventil 13 vorbeigeführt. Es kann sinnvoll sein, das bei An- und Abfahren der Anlage oder bei Störungen anfallende Material auf einen Abfallbehälter 14 zu fahren. Im regulären Betrieb wird der Strom G auf einen Extruder 18 geleitet. Der Extruder kann am Ein- und Ausgang Vorrichtungen 17, 19 zur Entlüftung des geschmolzenen Polymers aufweisen. Der extrudierte Polymerstrom K kann durch Düsen ausgepresst, in einem mit entionisiertem Wasser gefüllten Wasserbad 20 abgekühlt und durch einen Granulator 21 zu Granulat zerschnitten werden.

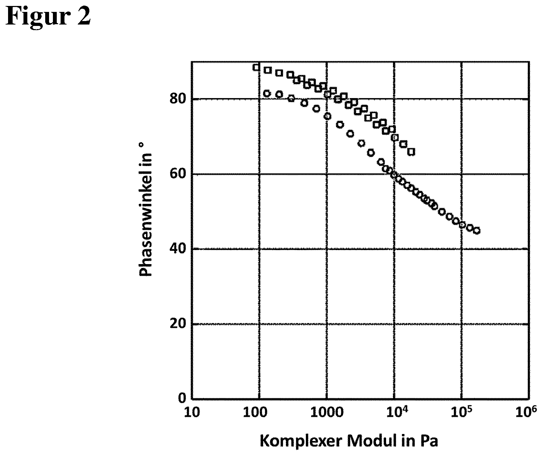

Die Figur 2 zeigt eine Auftragung des Phasenwinkels in ° als Funktion des komplexen Moduls G^{*}. Die einzelnen Messgrößen wurden nach dem weiter unten beschriebenen Verfahren erhalten. Dargestellt ist das viskoelastische Verhalten eines nach einem Stand der Technik hergestellten thermoplastischen Polyurethans (Kreise, untere Linie) und ein erfindungsgemäßes thermoplastisches Polyurethan, erhalten über das erfindungsgemäße Verfahren. Es ist deutlich sichtbar, dass das erfindungsgemäß hergestellte thermoplastische Polyurethan im Vergleich zum Stand der Technik Polyurethan einen höheren Phasenwinkel aufweist. Dieser höhere Phasenwinkel führt in der Extrusion zu einem verbesserten Anwendungsverhalten. Insbesondere kann die Strangaufweitung, der Einlaufdruckverlust und der Schmelzebruch über den Einsatz eines erfindungsgemäßen thermoplastischen Polyurethans verringert werden.

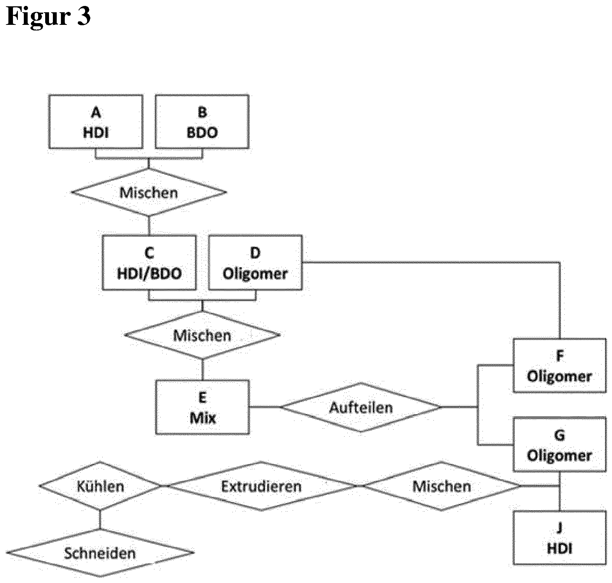

Die Figur 3 zeigt schematisch die Abfolge und die Stoffströme des erfindungsgemäßen Verfahrens. Strom A, B und J bilden die Edukströme, wobei die gesamte eingesetzte HDI-Menge über Strom A und Strom J gesteuert wird. Das BDO wird nur über den Strom B ins Verfahren eingeführt. Es wird zuerst eine HDI/BDO-Mischung hergestellt (Strom C), welche mit zurückgeführtem HDI/BDO-Oligomer (Strom D) zusammengeführt wird. Die Mischung dieses Stroms (Strom E) wird aufgeteilt, wobei einer der Teilströme (Strom F) zurückgeführt, d.h. im Kreis gefahren, wird. Der andere Teilstrom (Strom G) wird mit der Restmenge an HDI (Strom J) gemischt und extrudiert. Man erhält also ein Kreislaufverfahren, in dem ein Teil des HDI/BDO-Oligomer Stroms zurückgeführt wird.

### Beispiel

Das folgende Beispiel zeigt, dass über das erfindungsgemäße Verfahren thermoplastische Polyurethane mit verbesserter Schmelzeelastizität erhältlich sind.

### I. Verwendete Rohstoffe

1,6-Hexamethylendiisocyanat (HDI, Reinheit ≥ 99 Gew.-%) wurde von der Covestro AG bezogen.

1,4-Butandiol (BDO, Reinheit ≥ 99 Gew.-%) wurde von der Firma Ashland bezogen.

### II. Messung der Schmelzeelastizität:

Die Schmelzeelastizität wurde mittels eines Oszillationsrheometers nach ISO 6721-10:2015 bestimmt. Zur Bestimmung des komplexen Moduls G* und des Phasenwinkels d im linear elastischen Bereich wurde ein Rheometrics ARES-Rheometer mit Platte/Platte-Geometrie verwendet. Die Messtemperatur T wurde so gewählt, dass die Probe komplett aufgeschmolzen war. Die Messwerte wurden über verschiedene Temperaturen erfasst (170°C, 180°C, 200°C), wobei die Werte anschließend zu einer Kurve zusammengefasst wurden. Die Schmelzeelastizität ergibt sich aus dem Phasenwinkel bei G* = 10⁴ Pa (siehe auch Figur 2).

### III. Erfindungsgemäßes Verfahren:

Aus einer Vorlage wurde 1,6-Hexamethylendiisocyanat (HDI) mittels einer Pumpe bei Raumtemperatur zu einem Statikmischer gefördert (Strom A). Aus einer weiteren Vorlage wurde auf ca. 40 °C temperiertes 1,4-Butandiol (BDO) mittels einer Pumpe ebenfalls zum Durchlaufmischer gefördert (Strom B). Der Durchsatz des HDI-Stroms A und des BDO-Stroms B wurde mittels Massedurchflussmesser verfolgt. Im Mischer 7 wurden der HDI-Strom A und der BDO-Strom B zur Dispersion HDI/BDO vermischt/dispergiert (Strom C).

Der HDI/BDO-Strom C wird im Umlauf mit einem 182 °C heißen Oligomerstrom D in einem Mischer zusammengeführt und gemischt (Strom E). Durch die Temperatur des Oligomerstroms D kommt es zu einer Reaktion zwischen dem HDI und BDO, welche durch weiteres Vermischen in einem temperierbaren Mischer unter Bildung von Oligomeren und unter Abfuhr der Reaktionswärme fortgeführt wird. Der temperierbare Mischer wird mit Wärmeträgeröl beheizt/gekühlt und weist eine Wärmeaustauschfläche von mindestens 0,4 m² auf. Die Heizmitteltemperatur am Eintritt beträgt ca. 180 °C. Aus dem temperierbaren Mischer wird ein Ausgangsstrom als weitgehend ausreagierter HDI/BDO-Oligomerstrom mit einer Temperatur von 183 °C erhalten (Strom E).

Der Strom E wird mittels einer Verzweigung in zwei Teilströme F und G aufgespalten, wobei der Teilstrom F als Oligomerstrom D mittels einer Pumpe in auf ca. 182 °C beheizten Rohrleitungen zum oben erwähnten Mischer zurückgeführt wird. Der Massenstrom des Stroms G entspricht dem Massestrom des Stroms C.

Aus der HDI-Vorlage wird mittels einer weiteren Pumpe ein weiterer HDI-Strom (Strom J) entnommen und bei Raumtemperatur auf einen Extruder geleitet. In dem Extruder wird bei einer Temperatur von ca. 200 °C und einer Drehzahl von 66 Umdrehungen pro Minute der Oligomerstrom G und der HDI-Strom J vermischt und die Reaktion zum Polyurethan durchgeführt. Vor Ende des Extruders wird der entstehende Polymerstrom über eine Entgasung von flüchtigen Bestandteilen befreit. Der Druck in dieser Entgasung beträgt 200 mbar unter Umgebungsdruck. Der resultierende Polymerstrom K wird durch zwei Düsen gepresst, in einem Wasserbad mit entionisiertem Wasser abgekühlt und mittels eines Granulators zu Granulat zerschnitten.

Im erfindungsgemäßen Beispiel wurden folgende Edukt-Ströme eingesetzt:

| | | **Kg/h** | **Mol/h** |
|---|---|---|---|
| Strom A | HDI 1 | 2,911 | 17,306 |
| Strom B | BDO | 2,000 | 22,193 |
| Strom J | HDI 2 | 0,784 | 4,661 |
| HDI Gesamt | | | 21,697 |

Das erfindungsgemäß hergestellte thermoplastische Polyurethan weist einen Phasenwinkel von ca. 70° bei einem komplexen Modul von 10⁴ Pa auf und seine Schmelze ist, verglichen mit einem thermoplastischen Polyurethan hergestellt nach Stand-der-Technik-Verfahren, deutlich weniger strukturviskos und neigt weniger zu Schmelzebruch (s.u. Vergleichsversuch).

### IV. Verfahren nach dem Stand der Technik:

In einem 250 ml Rührkessel werden 24,40 g 1,4-Butandiol für 30 Minuten unter Rühren (170 Umdrehung pro Minute) und Stickstoffeinleitung auf 90 °C geheizt. Anschließend wird über einen Zeitraum von 45 Minuten 45,51 g HDI kontinuierlich zu dem Butandiol dosiert. Während dieses Zeitraumes wird die Temperatur des Reaktionsgemisches konstant um 4 °C pro Minute erhöht, bis nach 25 Minuten eine Temperatur von 190 °C erreicht wird. Sobald diese Produkttemperatur erreicht wird, wird die Geschwindigkeit des Rührers auf 300 Umdrehung pro Minute erhöht. Die Temperatur im Rührkessel wird konstant zwischen 190 °C und 200 °C gehalten und nach Ende der HDI Dosierung wird die Schmelze für weitere 5 Minuten gerührt. Anschließend wird sie im heißen Zustand in eine Aluminiumform gegossen.

Die Untersuchung der Schmelzeelastizität ergibt für ein nach einem Verfahren aus dem Stand der Technik hergestellten thermoplastischen Polyurethan einen Phasenwinkel von 60° bei 10⁴ Pa (Figur 2). Dieser Wert liegt im Vergleich zu dem erfindungsgemäß hergestellten thermoplastischen Polyurethan deutlich niedriger. Dies bedeutet, dass die Fließeigenschaften der Polymerschmelze stark elastisch geprägt sind. Dieser Wert deutet auf ein stark viskoelastisches Polyurethan mit ausgeprägter Strukturviskosität hin. Die Strukturviskosität resultiert, verglichen mit dem erfindungsgemäßen Polyurethan, in schlechteren Verarbeitungseigenschaften. So führen diese viskoelastischen Eigenschaften beispielsweise zu einem ungünstigeren Extrusionsverhalten. Das Polymer neigt zu hohen Einlaufdruckverlusten, zeigt eine deutliche Strangaufweitung nach der Extrusionsdüse und ist anfällig für Schmelzebruch. Insbesondere letzteres kann zu Unregelmäßigkeiten der extrudierten Polymeroberfläche führen.

## Patentansprüche

1. Verfahren zur kontinuierlichen Herstellung thermoplastischen Polyurethans umfassend die Schritte
a) Herstellen einer Mischung aus einer Teilmenge Hexamethylendiisocyanat (HDI) und der Gesamtmenge Butandiol (BDO);
b) Vermischen der im Verfahrensschritt a) hergestellten Mischung mit einem aus Verfahrensschritt e) erhaltenen Oligomerisat-Ausgangsteilstrom;
c) Zur Reaktion bringen der Mischung aus Verfahrensschritt b);
d) Aufteilen der in Schritt c) erhaltenen Reaktionsmischung in zwei Ausgangsteilströme;
e) Rückführen eines Ausgangsteilstromes aus Verfahrensschritt d) als Eingangsteilstrom für die Mischung im Verfahrensschritt b);
f) Vermischen der Restmenge Hexamethylendiisocyanat mit dem verbleibenden Ausgangsteilstrom des Verfahrensschrittes d); und
g) Ausreagieren der in Verfahrensschritt f) erhaltenen Mischung zum Erhalt eines thermoplastischen Polyurethans.

2. Verfahren gemäß Anspruch 1, wobei das Hexamethylendiisocyanat 1,6-Hexamethylendiisocyanat und das Butandiol 1,4- Butandiol ist.

3. Verfahren gemäß einem der vorhergehenden Ansprüche, wobei das Molverhältnis von HDI zu BDO, über den gesamten Prozess, berechnet als Quotient Mol HDI / Mol BDO, größer oder gleich 0,9 und kleiner oder gleich 1,1 beträgt.

4. Verfahren gemäß einem der vorhergehenden Ansprüche, wobei die Temperatur im Verfahrensschritt a) größer oder gleich 25°C und kleiner oder gleich 60°C beträgt.

5. Verfahren gemäß einem der vorhergehenden Ansprüche, wobei die Temperatur im Verfahrensschritt c) größer oder gleich 170°C und kleiner oder gleich 190°C beträgt.

6. Verfahren gemäß einem der vorhergehenden Ansprüche, wobei die Temperatur im Verfahrensschritt g) größer oder gleich 180°C und kleiner oder gleich 240°C beträgt.

7. Verfahren gemäß einem der vorhergehenden Ansprüche, wobei das molare Verhältnis des im Verfahrensschritt a) und im Verfahrensschritt f) eingesetzten HDIs, berechnet als Mol HDI in a) / Mol HDI in f), größer oder gleich 2 und kleiner oder gleich 8 beträgt.

8. Verfahren gemäß einem der vorhergehenden Ansprüche, wobei das Gewichtsverhältnis des im Verfahrensschritt b) zurückgeführten Oligomerisats bezogen auf die Menge an eingesetzter Mischung aus HDI und BDO größer oder gleich 10 und kleiner oder gleich 30 beträgt.

9. Verfahren gemäß einem der vorhergehenden Ansprüche, wobei der Gewichtsanteil der im Verfahrensschritt f) zugegebenen HDI-Menge bezogen auf die Menge an Oligomerisat, berechnet als kg/h HDI f) / kg/h Oligomerisat f), größer oder gleich 0,1 und kleiner oder gleich 0,6 beträgt.

10. Verfahren gemäß einem der vorhergehenden Ansprüche, wobei das im Verfahrensschritt f) zugegebene HDI eine Temperatur von größer oder gleich 10°C und kleiner oder gleich 150°C aufweist.

11. Verfahren gemäß einem der vorhergehenden Ansprüche, wobei das Molverhältnis von HDI zu BDO im Verfahrensschritt a), berechnet als Quotient Mol HDI / Mol BDO, größer oder gleich 0,5 und kleiner oder gleich 0,99 beträgt.

12. Verfahren gemäß einem der vorhergehenden Ansprüche, wobei das ausreagierte thermoplastische Polymer aus dem Verfahrensschritt g) extrudiert wird.

13. Verfahren gemäß Anspruch 12, wobei die Temperatur während der Extrusion größer oder gleich 190°C und kleiner oder gleich 240°C beträgt.

14. Thermoplastisches Polyurethan erhältlich durch zur Reaktion bringen von 1,6-Hexamethylendiisocyanat (HDI) und 1,4-Butandiol (BDO),
**dadurch gekennzeichnet, dass**
das Polyurethan im geschmolzenen Zustand im linear elastischen Bereich bei einem komplexen Modul G^{*} von 10⁴ Pa einen Phasenwinkel von größer oder gleich 65° und kleiner oder gleich 75° aufweist, wobei Phasenwinkel und komplexer Modul nach ISO 6721-10:2015 bestimmt werden.

15. Polyurethan gemäß Anspruch 14, wobei das molare Verhältnis von Hexamethylendiisocyanat zu Butandiol, berechnet als Molmenge HDI / Molmenge BDO, größer oder gleich 0,9 und kleiner oder gleich 1,1 beträgt.

16. Polyurethan gemäß einem der Ansprüche 14 - 15, wobei das thermoplastische Polyurethan katalysatorfrei ist.
